# EUROPEAN PATENT APPLICATION

(11) **EP 4 827 241 A1**
(43) Date of publication of application: **21.10.2026**
(21) Application number: 25170851.7
(22) Date of filing: 15.04.2025
(51) Int. Cl.: H05B 47/115, H05B 47/19, H05B 47/175, H04W 4/029, H04W 4/33, G08C 17/02, H04W 4/02, H04W 12/00, H04L 12/28, H04L 67/306, H04L 67/00

(54) **LIGHTING CONTROL**

(71) Applicant: Helvar Oy Ab, 02150 Espoo (FI)
(72) Inventor: JUSLÉN, Henri, 02150 ESPOO (FI); NASIR, Omar, 02150 ESPOO (FI); TAKALA, Pasi, 02150 ESPOO (FI); WAUGH, Joshua, 02150 ESPOO (FI); KALLAS, Juha, 02150 ESPOO (FI)
(74) Representative: Berggren Oy

(57) **Abstract**

According to an embodiment, a lighting control apparatus (126-k) for a luminaire (120-k) that is applicable for illuminating a location of a space is provided, the lighting control apparatus (126-k) comprising: a ranging portion (123-k, 123-k') arranged to carry out a wireless ranging procedure with a portable user apparatus (130-k) of a plurality of portable user apparatuses (130) to determine the distance from the luminaire to the respective portable user apparatus (130-k); and a control portion (122-k) for controlling light output from one or more light sources (121-k) of the luminaire (120-k), the control portion (122-k) arranged to: operate the ranging portion (123-k, 123-k') to determine a respective distance from the luminaire (120-k) to at least one of said plurality of portable user apparatuses (130), identify, based on the respective distances determined therefor, one or more portable user apparatuses that meet a predefined distance criterion; and control the light output from the one or more light sources (121-k) based at least in part on respective authorizations assigned to the identified one or more portable user apparatuses.

## Description

### TECHNICAL FIELD

The present invention relates to autonomous lighting control.

### BACKGROUND

Many lighting systems applied for illuminating an indoor space or area or an outdoor area at least partially rely on autonomous control of light output of luminaires of the lighting system, where the autonomous control for a luminaire is based on sensor data that is descriptive of environmental characteristics at or close to a location of the luminaire and that is hence applicable for automated lighting control. Such sensor data may be captured using one or more sensors, which may be provided in the luminaire or in a dedicated sensor unit that is communicatively coupled to the luminaire.

Non-limiting examples of such sensor include an occupancy sensor and a light sensor: while sensor data obtained from an occupancy sensor may be applied as control information for switching and keeping the lights on in response to detecting occupancy in the space and to switching and keeping the lights off in response to detecting non-occupancy in the space, sensor data obtained from a light sensor may be applied to control the light output in view of the ambient light level in the space such that a desired overall illumination level is provided. Hence, the sensor data enables at least partially autonomous lighting control that ensures user comfort while minimizing energy consumption.

Another aspect of autonomous lighting control arises from communication between nodes of a lighting system over a lighting control network that communicatively couples the nodes of the lighting system to each other. As an example in this regard, the luminaires of the lighting system may send status messages that report sensor data captured therein or lighting control actions taken therein to other luminaires and receive corresponding status messages from the other luminaires. Consequently, lighting control in a luminaire may partially rely on the sensor data captured and/or lighting control actions taken in one or more other luminaires of the lighting system. Such an approach enables e.g. advanced lighting control solutions where sensor data over a wider area is employed in controlling the light output of the luminaire and/or where adjustments in the light output of the luminaire follow those of one or more other luminaires in its proximity.

While the sensor-data-based lighting control is a proven and widely applied concept, there is still room for improvement in terms of making best possible use of the data captured or received at a luminaire to ensure energy-efficient lighting and/or in terms of providing additional aspects of lighting control based on the sensor data.

### SUMMARY

It is an object of the present invention to provide a technique for improved autonomous lighting control based on data captured at or for a luminaire in the course of its operation.

According to an embodiment, a lighting control apparatus for a luminaire that is applicable for illuminating a location of a space is provided, the lighting control apparatus comprising: a ranging portion arranged to carry out a wireless ranging procedure with a portable user apparatus of a plurality of portable user apparatuses to determine the distance from the luminaire to the respective portable user apparatus; and a control portion for controlling light output from one or more light sources of the luminaire, the control portion arranged to: operate the ranging portion to determine a respective distance from the luminaire to at least one of said plurality of portable user apparatuses, identify, based on the respective distances determined therefor, one or more portable user apparatuses that meet a predefined distance criterion; and control the light output from the one or more light sources based at least in part on respective authorizations assigned to the identified one or more portable user apparatuses.

According to another embodiment, a lighting system is provided, the lighting system comprising: one or more luminaires for illuminating respective locations of a space, wherein each luminaire comprises a lighting control apparatus according to an embodiment described in the foregoing, and a plurality of portable user apparatuses, each arranged to carry out the wireless ranging procedure with the ranging portion of the lighting control apparatus.

According to another embodiment, a method for controlling a lighting system that comprises a luminaire for illuminating a location of a space and a plurality of portable user apparatuses is provided, the method comprising: carrying out a respective ranging procedure between a lighting control apparatus of the luminaire and at least one of said plurality of portable user apparatuses to determine a respective distance from the luminaire to said at least one of the plurality of portable user apparatuses; identifying, based on the respective distances determined therefor, one or more portable user apparatuses that meet a predefined distance criterion; and controlling light output from one or more light sources of the luminaire based at least in part on respective authorizations assigned to the identified one or more portable user apparatuses.

According to another embodiment, a computer program for lighting control is provided, the computer program comprising computer readable program code configured to cause performing at least the method according to the embodiment described in the foregoing when said program code is executed on a computer apparatus.

The computer program according to the above-described example embodiment may be embodied on a volatile or a non-volatile computer-readable record medium, for example as a computer program product comprising at least one computer readable non-transitory medium having the program code stored thereon, which, when executed by a computer apparatus, causes the computer apparatus at least to perform the method according to the example embodiment described in the foregoing.

The exemplifying embodiments of the invention described in the present disclosure and variations thereof are not to be interpreted to pose limitations to the applicability of the appended claims. Moreover, the verb "to comprise" and its derivatives are used in the present disclosure to indicate an open limitation that does not exclude the existence of also unrecited features.

Some features of the invention are set forth in the appended claims. Aspects of the invention, however, both as to its construction and its method of operation, together with additional objects and advantages thereof, will be best understood from the following description of example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some elements of a lighting system according to an example;
Figure 2A illustrates a block diagram of some elements of a luminaire according to an example;
Figure 2B illustrates a block diagram of some elements of a luminaire according to an example;
Figure 3 illustrates a method according to an example; and
Figure 4 illustrates a block diagram of some components of an apparatus according to an example.

### DESCRIPTION OF SOME EMBODIMENTS

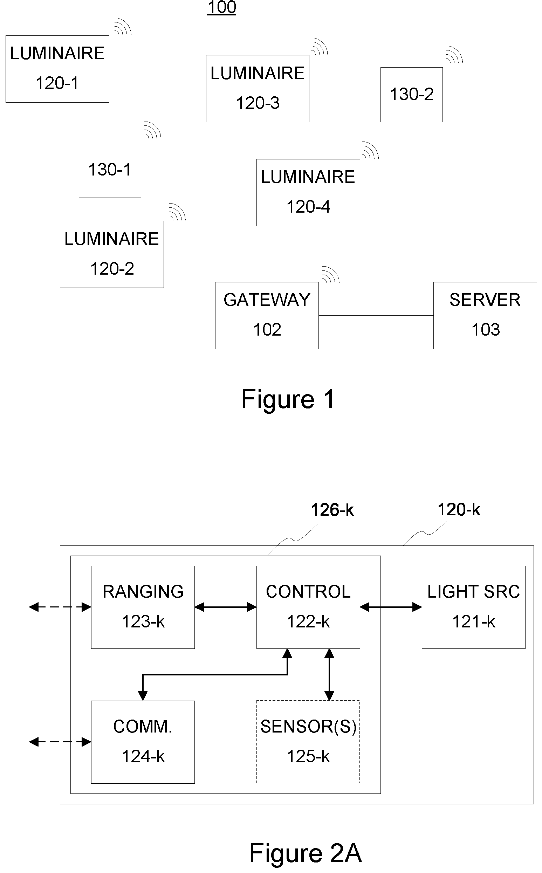

Figure 1 illustrates a block diagram of some logical elements of a lighting system 100 according to an example. The lighting system 100 is provided for illuminating one or more spaces and/or areas, where the one or more spaces and/or areas illuminated by the lighting system 100 may comprise e.g. one or more indoor spaces or areas and/or one or more outdoor areas. The lighting system comprises luminaires 120-1, 120-2, 120-3 and 120-4 provided for illuminating respective locations within the one or more spaces and/or areas. The luminaires 120-1 to 120-4 represent a plurality of luminaires, which may be jointly referred to via a reference number 120, whereas any individual luminaire of the plurality of luminaires 120 may be referred to via a reference number 120-k. The plurality of luminaires 120 may be communicatively coupled to each other via a wireless communication network or via respective wireless communication links using a suitable wireless communication technique known in the art, each of the plurality of luminaires 120 hence serving as a respective node of a lighting control network.

The schematic illustration of Figure 1 further shows portable user apparatuses 130-1 and 130-2 that are provided for interacting with the luminaires 120-k of the lighting system 100 in a manner described in the following. The portable user apparatuses 130-1 and 130-2 represent a plurality of user apparatuses, which may be jointly referred to via a reference number 130, whereas any individual portable user apparatus of the plurality of portable user apparatuses 130 may be referred to via a reference number 130-k. According to an example, the plurality of portable user apparatuses 130 may be considered as elements of the lighting system 100, whereas in other examples the plurality of portable user apparatuses 130 may be considered as elements that are separate from the lighting system 100 but that are arranged for interacting with the luminaires 120-k of the lighting system 100.

The examples described in the present disclosure at least implicitly assume that the underlying lighting system 100 comprises the plurality of luminaires 120, i.e. two or more luminaires. However, in other examples the lighting system 100 may involve only a single luminaire 120-k and, hence, in the present disclosure the expression "plurality of luminaires 120" is to be construed as one that also encompasses the scenario where the lighting system 100 comprises only a single luminaire. Along similar lines, the lighting system 100 may comprise or it may be arranged for interacting with only a single portable user apparatus 130-k and, therefore, in the present disclosure the expression "plurality of portable user apparatuses 130" is to be construed as one that also encompasses the scenario where only a single portable user apparatus 130-k is considered.

The example of Figure 1 further illustrates a lighting system gateway 102 and a server 103. The lighting system gateway 102 may be communicatively coupled to the plurality of luminaires 120 via the lighting control network, the lighting system gateway 102 thereby also constituting a node of the lighting control network. The lighting system gateway 102 may be communicatively coupled to the server 103, where the communitive coupling between these two entities may be provided via a communication network such as the Internet. Hence, the lighting control network communicatively couples the luminaires 120-k of the lighting system 100 to the server 103 via the lighting system gateway 102.

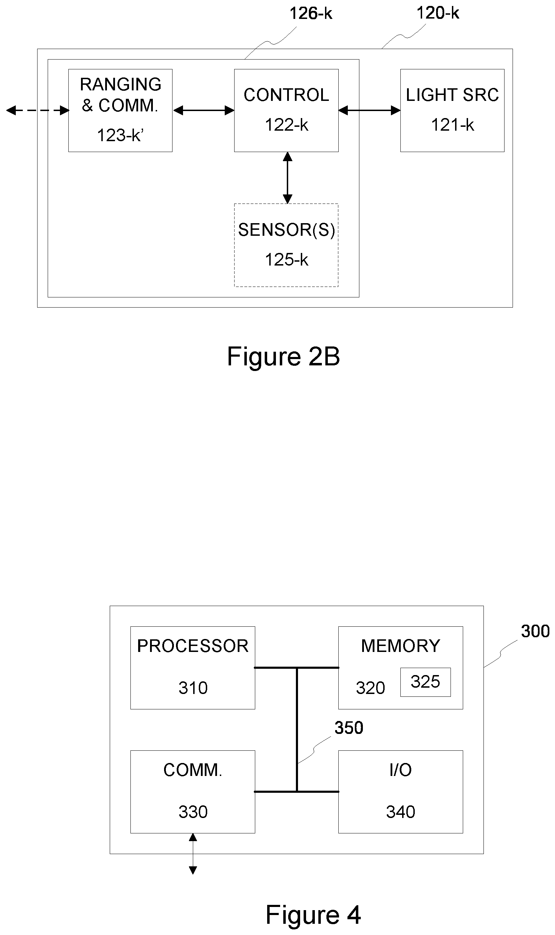

Each of the lighting system gateway 102 and the server 103 is to be construed as a respective logical entity that may be implemented by one or more computer apparatuses. As an example, the lighting system gateway 102 may be implemented by a single computer apparatus and/or the server 103 may be implemented by one or more computer apparatuses that may be arranged to provide a cloud computing service. **In** this regard, each computer apparatus involved may comprise a processor and a memory, where the memory is arranged to store computer program code that, when executed by the processor, implements (at least a portion of) operation of the respective one of the lighting system gateway 102 or the server 103 according to the present disclosure. More detailed examples of using a computer apparatus to implement at least some functionalities of the lighting system gateway 102 or the server 103 are described in the following with references to Figure 4.

It is worth noting that the example of Figure 1 serves to illustrate the plurality of luminaires 120, the lighting system gateway 102 and the server 103 as respective functional elements of the lighting system 100, while on the other hand the illustration of Figure 1 does not serve to illustrate any physical characteristics of these elements of the lighting system 100 and/or any aspects of spatial relationship between these elements of the lighting system 100. The lighting system 100 may include one or more further elements in addition to those illustrated in the example of Figure 1, e.g. one or more control apparatuses and/or one or more sensor units, which may be likewise coupled to plurality of luminaires 120, to the lighting system gateway 102, and to each other via the lighting control network.

In the following, some characteristics of structure and operation of any of the plurality of luminaires 120 are described via references to the single luminaire 120-k, whereas these characteristics pertain to each of the plurality of luminaires 120, unless explicitly described otherwise. Moreover, certain characteristics of structure and operation of the luminaire 120-k are described herein for completeness of the description, whereas details of luminaire characteristics and operation are outside the scope of the present disclosure.

Figure 2A illustrates a block diagram of some elements of a luminaire 120-k according to an example, where the luminaire 120-k comprises at least one light source 121-k for providing light output of the luminaire 120-k and a lighting control apparatus 126-k. The lighting control apparatus 126-k comprises a control portion 122-k, a ranging portion 123-k and communication portion 124-k, whereas the control apparatus 126-k optionally further comprises a sensor portion 125-k. The ranging portion 123-k comprises a ranging apparatus arranged to carry out a wireless ranging procedure with another apparatus to determine a distance from the luminaire 120-k to said another apparatus, the communication portion 124-k comprises one or more communication apparatuses that are arranged for wireless communication with other apparatuses over the lighting control network, and the sensor portion 125-k, if included in the luminaire 120-k, comprises one or more sensors for observing respective one or more environmental characteristics at the location of the luminaire 120-k. The control portion 122-k is arranged to control the light output from the one or more light sources 121-k at least partially based on information obtained via operation of the ranging portion 123-k, on information received via the communication portion 124-k and on sensor data obtained from the sensor portion 125-k (if included in the luminaire 120-k).

Figure 2B illustrates a block diagram of some elements of a luminaire 120-k according to another example, where the separate ranging portion 123-k and the communication portion 124-k shown in the illustration of Figure 2A are replaced by ranging and communication portion 123-k', which serves to provide the respective functionalities of the ranging portion 123-k and the communication portion 124-k e.g. via operation of a communication apparatus that is arranged both for determining a distance from the luminaire 120-k to a portable user apparatus 130-k and for wireless communication with other apparatuses over the lighting control network. For editorial clarity of description, in the following the ranging and communication portion 123-k' is predominantly referred to as a ranging portion 123-k'.

According to an example, the lighting control apparatus 126-k comprises a processor and a memory, where the memory is arranged to store computer program code that, when executed by the processor, causes the computer apparatus to implement at least some aspects of operation of the control portion 122-k according to the present disclosure. More detailed examples of using the processor and the memory to implement at least some functionalities of the control portion 122-k are described in the following with references to Figure 4.

The luminaire 120-k or an element thereof may have a device ID, e.g. an address, a serial number, a name, etc. assigned thereto, where the device ID assigned to the luminaire 120-k may be referred to as its luminaire ID. The luminaire ID may be stored, for example, in the memory provided in the luminaire 120-k (e.g. in the memory provided at the lighting control apparatus 126-k). The luminaire ID may be applied, for example, to identify the luminaire 120-k in communication between elements of the lighting control network as a source address of messages transmitted from the luminaire 120-k and/or as a destination address of messages transmitted to the luminaire 120-k.

According to an example, the at least one light source 121-k may comprise one or more light emitting diodes (LEDs) and the control portion 122-k may comprise or it may be provided as a LED driver device, whereas in another non-limiting example the at least one light source 121-k may comprise one or more fluorescent lamps and the control portion 122-k may comprise or it may be provided as an electronic ballast. In general, the one or more light sources 121-k may comprise light-emitting elements or components of any type together with the control portion 122-k comprising control electronics required for controlling the light output from the one or more light sources 121-k.

Along the lines described in the foregoing, the ranging portion 123-k comprises the ranging apparatus arranged to carry out a wireless ranging procedure with another apparatus to determine a distance from the luminaire 120-k to the other apparatus, where the other apparatus may be e.g. one of the plurality of portable user apparatuses 130. The wireless ranging procedure comprises a signaling exchange between the ranging apparatus and the other apparatus, where the ranging apparatus of the ranging portion 123-k transmits one or more measurement signals to the other apparatus, and the other apparatus responds to the one or more measurements signals by transmitting corresponding one or more response signals to the ranging apparatus of the ranging portion 123-k. The ranging apparatus of the ranging portion 123-k determines the distance from the luminaire 120-k to the other apparatus based on respective transfer characteristics of the one or more pairs of the measurement signal and the corresponding response signal received from the other apparatus. In this regard, a response signal transmitted from the other apparatus in response to a certain measurement signal transmitted from the ranging apparatus of the ranging portion 123-k may be referred to as a response signal that corresponds to the respective measurement signal and these two signals constitute a respective pair of a measurement signal and the corresponding response signal.

In the above-described signaling exchange of the wireless ranging procedure, the ranging apparatus of the ranging portion 123-k that transmits the one or more measurement signals may be referred to as an initiator, whereas the other apparatus that responds to the one or more measurement signals by transmitting the corresponding one or more response signals to the ranging apparatus of the ranging portion 123-k may be referred to as a reflector. The wireless ranging procedure may involve the initiator and the reflector following a predefined procedure in terms of transmission timing of the measurement signals and/or the corresponding response signals, in terms of transmission frequencies of the of the measurement signals and/or the corresponding response signals, and/or in terms of content of the measurement signals and/or the corresponding response signals. In non-limiting examples, the distance determination may be based, for example, on round-trip-time (RTT) between the initiator and the reflector and/or on phase difference between the measurement signals transmitted from the initiator and the corresponding response signals received from the reflector:
- The RTT may be derived, for example, via the reflector responding to a given measurement signal received from the initiator according to a predefined procedure and the initiator estimating the RTT based on the elapsed time between transmission of the given measurement signal and reception of the response signal to the given measurement signal, whereas the reflector may estimate the distance based on the respective RTTs estimated from a plurality of pairs of a measurement signal and a corresponding response signal.
- The phase difference may be derived, for example, via the reflector responding to a given measurement signal received from the initiator such that the phase of the response signal upon its transmission from the reflector has a predefined relationship to the phase of the corresponding measurement signal upon its reception at the reflector (e.g. the phase remains the same or there is a predefined phase shift), whereas the initiator may determine a phase difference for a pair of a measurement signal and the corresponding response signal based on the phase of the measurement signal upon its transmission from the initiator and on the phase of the corresponding response signal upon its reception at the initiator. Consequently, the initiator may determine the distance based on multiple pairs of a measurement signal and a corresponding response signal, which may be exchanged at different frequencies.

It is worth noting that the above-described example of the wireless ranging procedure that relies on the RTT and/or phase difference derivable based on messages exchanged between the initiator and the reflector serves as a non-limiting example in this regard, and in other examples the ranging portion 123-k may carry out the distance determination via application of a different procedure and/or different measurements without departing from the scope of the present disclosure.

Along the lines described in the foregoing, the communication portion 124-k comprises one or more communication apparatuses, e.g. one or more wireless transceivers, that enable wireless communication with other apparatuses over the lighting control network, e.g. with the plurality of portable user apparatuses 130. The wireless communication may be carried out via using a suitable short-range wireless communication technique known in the art that enables communication over ranges from a few meters up to a few hundred meters. Non-limiting examples of suitable wireless communication techniques include Bluetooth, Bluetooth Low-Energy (BLE), ZigBee, WLAN/Wi-Fi according to an IEEE 802.11 family of standards. In a particular example of making use of a wireless communication technique, the lighting control network may be provided as a wireless mesh network, e.g. one according to the Bluetooth or Bluetooth LE Mesh networking protocol.

In the foregoing, the respective functionalities provided by the ranging portion 123-k and the communication portion 124-k are described with an (implicit) assumption of these two elements of the lighting control apparatus 126-k being provided separately from each other, e.g. according to the example illustrated in Figure 2A. In other examples, the wireless ranging functionality and the wireless communication functionality may be provided by a single entity, e.g. by the ranging portion 123-k', as illustrated in the example of Figure 2B.

Along the lines described in the foregoing, the ranging portion 123-k' is arranged to provide the respective functionalities of the ranging portion 123-k and the communication portion 124-k described above. As an example in this regard, the ranging portion 123-k' may comprise a communication apparatus that is both capable of wireless communication with other apparatuses and capable of carrying out the wireless ranging procedure. In an example, the ranging portion 123-k' comprises a Bluetooth apparatus arranged to carry out the wireless ranging procedure according to the Bluetooth Channel Sounding feature. Such a Bluetooth apparatus may be one that is implemented using Bluetooth or BLE according to the Bluetooth Core specification version 6.0 (or later). In another example, the ranging portion 123-k' comprises a Wi-Fi apparatus arranged to carry out the wireless ranging procedure according to the Fine Timing Measurement (FTM) protocol defined in the IEEE 802.11-2016 series specifications (or later), whereas in a further example the ranging portion 123-k' comprises a wireless personal area network (WPAN) communication apparatus according to the IEEE 802.15.4 standard arranged to carry out the wireless ranging procedure according the Ultra-wideband impulse radio (UWB-IR) ranging.

As described in the foregoing, the sensor portion 125-k that is optionally included in the luminaire 120-k comprises one or more sensors arranged to observe respective one or more environmental characteristics at the location of the luminaire 120-k. The one or more sensors of the sensor portion 125-k may be communicatively coupled, e.g. via respective electrical wires, to the control portion 122-k in order to provide respective sensor signals thereto. The sensor portion 125-k comprises at least an occupancy sensor for monitoring occupancy at the location of the luminaire 120-k, e.g. a passive infrared (PIR) sensor, a video camera or a thermal camera, whereas the sensor portion 125-k may comprise one or more additional sensors.

In the course of its operation, the control portion 122-k may record or derive respective sensor indications based on respective sensor signals received from the sensor portion 125-k, which may be referred to as respective local sensor indications since they are based on sensor data captured locally at the luminaire 120-k, whereas the local sensor indications recorded or derived at the luminaire 120-k may be jointly referred to as local sensor data. As a particular example in this regard, the control portion 122-k derives occupancy state indications based on an occupancy sensor signal received from the occupancy sensor of the sensor portion 125-k, where the occupancy state indication may include one of occupancy or non-occupancy at the location of the luminaire 120-k.

The occupancy state indications are useable by the control portion 122-k e.g. to control the light output from the one or more light sources 121-k in dependence of occupancy at the location of the luminaire 120-k by controlling the one more light sources 121-k to provide light output at a target light intensity when the occupancy state indication indicates occupancy at the location of the luminaire 120-k and by controlling the one more light sources 121-k to provide light output at a stand-by light intensity when the occupancy state indication indicates non-occupancy at the location of the luminaire 120-k, where the stand-by light intensity is substantially lower than the target light intensity. In this regard, the target light intensity may be a predefined or user-controllable light intensity that provides sufficient illumination level for the occupant(s) of the location and the stand-by light intensity may be zero or a predefined small non-zero light intensity. In case the stand-by light intensity is zero, setting the light output to the stand-by light intensity may be also referred to as switching off the light output.

In the following, some characteristics of operation of any of the plurality of portable user apparatuses 130 are described via references to the single portable user apparatus 130-k, whereas these characteristics pertain to each of the plurality of portable user apparatuses 130, unless explicitly described otherwise. According to an example, the portable user apparatus 130-k comprises a processor and a memory, where the memory is arranged to store computer program code that, when executed by the processor, causes the computer apparatus to implement at least some aspects of operation of the portable user apparatus 130-k according to the present disclosure. More detailed examples of using the processor and the memory to implement at least some functionalities of the portable user apparatus 130-k are described in the following with references to Figure 4.

The portable user apparatus 130-k comprises a ranging portion similar to the ranging portion 123-k, 123-k' described in the foregoing for the luminaire 120-k and the portable user apparatus 130-k is arranged to carry out the wireless ranging procedure with the ranging portion 123-k, 123-k' of the luminaire 120-k to enable the ranging portion 123-k, 123-k' to determine the distance from the luminaire 120-k to the portable user apparatus 130-k. The portable user apparatus 130-k is assigned to a specific user and it serves as an identification of the respective user in the one or more spaces and/or areas the lighting system 100 serves to illuminate. The user is expected to carry the portable user apparatus 130-k with her/him when moving about the one or more spaces and/or areas and hence the luminaires 120-k is able to identify a user and the user's distance from the luminaire 120-k via the wireless ranging procedure carried out with the portable user apparatus 130-k assigned to the respective user.

In this regard, the portable user apparatus 130-k may be assigned a user ID, e.g. a name and/or a number associated with the respective user. The user ID may be stored, for example, in the memory provided in the portable user apparatus 130-k and the user ID may be applied, for example, to identify the portable user apparatus 130-k (and hence its user) in communication with the plurality of luminaires 130 of the lighting system 100. In particular, the user ID is applicable for identifying a portable user apparatus 130-k (and hence its user) in the wireless ranging procedure carried out between the respective portable user apparatus 130-k and ranging portion 123-k, 123-k' of the luminaire 120-k.

The portable user apparatus 130-k may comprise any electronic apparatus carried with the user when moving about the one or more spaces and/or areas the lighting system 100 serves to illuminate. In one example, the portable user apparatus 130-k is provided as a specific-purpose apparatus that is designed to serve as the portable user apparatus 130-k associated with the lighting system 100, whereas in another example the portable user apparatus 130-k is a general-purpose apparatus that is arranged to serve as the portable user apparatus 130-k associated with the lighting system 100 alongside with its other functions. As non-limiting examples in this regard, such a specific-purpose apparatus may be an electronic tag integrated into a key fob or into an ID badge worn by the respective user, while such a general-purpose apparatus may be a mobile communication device arranged to execute a computer program that makes it (also) serve as the portable user apparatus 130-k associated with the lighting system 100.

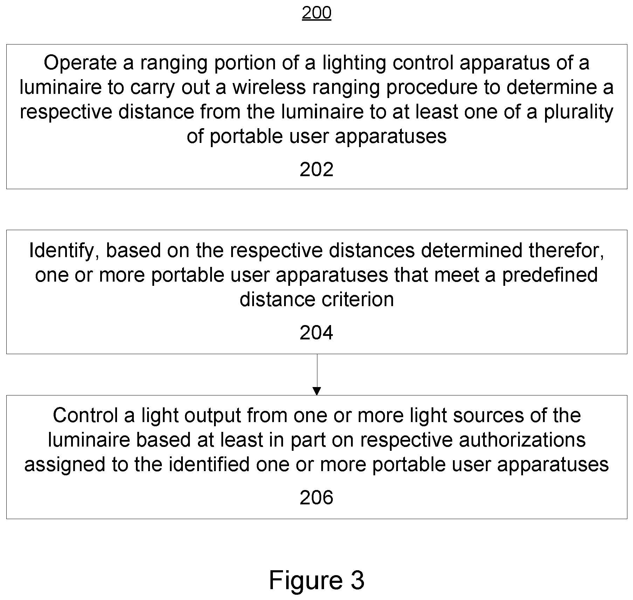

Along the lines described in the foregoing, the control portion 122-k is arranged to control the light output from the one or more light sources 121-k based at least in part on information obtained via operation of the ranging portion 123-k, 123-k', whereas in some examples the lighting control via operation of the control portion 122-k may further partially rely on the information received via the communication portion 124-k and on sensor data obtained from the sensor portion 125-k (if included in the luminaire 120-k). In this regard, the lighting control by the control portion 122-k may be carried out according to a method 200 illustrated by a block diagram in Figure 3. The method 200 comprises the following steps:
- operating the ranging portion 123-k, 123-k' to carry out the wireless ranging procedure to determine a respective distance from the luminaire 120-k to at least one of the plurality of portable user apparatuses (block 202);
- identifying, based on the respective distances determined therefor, one or more portable user apparatuses that meet a predefined distance criterion (block 204); and
- controlling the light output from the one or more light sources 121-k based at least in part on respective authorizations assigned to the identified one or more portable user apparatuses (block 206).

The operations described above with references to blocks 202 to 206 may be varied or complemented in a number of ways without departing from the scope of the method 200, e.g. in accordance with the examples described in the foregoing and/or the following with a reference to an aspect of operation of the luminaire 120-k and/or with a (direct) reference to operations carried out in relation to respective one of the blocks 202 to 206.

The aspect of the control portion 122-k operating the ranging portion 123-k, 123-k' to determine the respective distance from the luminaire 120-k to at least one of the plurality of portable user apparatuses 120 (cf. block 202) may be carried as described in the foregoing, i.e. via the control portion 122-k operating the ranging portion 123-k, 123-k' to carry out the wireless ranging procedure separately for at least one of the plurality of user apparatuses 130. In consideration of a certain portable user apparatus 130-k, the wireless ranging procedure may comprise the following steps:
- transmit the one or more measurement signals to the respective portable user apparatus 130-k;
- receive corresponding one or more response signals from the respective portable user apparatus 130-k; and
- determine the distance to the respective portable user apparatus 130-k based on respective transfer characteristics of the one or more pairs of the measurement signal transmitted to the respective portable user apparatus 130-k and the corresponding response signal received from the respective portable user apparatus 130-k.

In various examples in this regard, along the lines described in the foregoing, the transfer characteristics under consideration may comprise the RTT between the ranging portion 123-k, 123-k' and the respective portable user apparatus 130-k and/or the phase difference between the measurement signals transmitted from the ranging portion 123-k, 123-k' and the corresponding response signals received from the respective portable user apparatus 130-k.

The control portion 122-k may initiate the method 200 by determining the respective distances to those ones of the plurality of portable user apparatuses 130 that are currently within the operating range of the ranging apparatus of the ranging portion 123-k, 123-k' according to a predefined schedule, e.g. at predefined time intervals. In other words, the control portion 122-k may repeat the method 200 according to the predefined schedule. Additionally or alternatively, the method 200 may be initiated in the control portion 122-k in response to a portable user apparatus 130-k detecting presence of the luminaire 120-k in its proximity and the portable user apparatus 130-k notifying the control portion 122-k of the luminaire 120-k of its presence near or at the location of the luminaire 120-k e.g. by sending a notification signal or message thereto. Depending on the respective locations of the portable user apparatuses 130-k upon initiating the method 200, this may result in determining the respective distance to each of the plurality of portable user apparatuses or it may result in determining the respective distance to a (limited) subset of the plurality of portable user apparatuses 130, both these scenarios resulting in the method 200 proceeding into identification of those ones of the portable user apparatuses that meet the predefined distance criterion. In a further scenario, none of the plurality of portable user apparatuses 130 is within the operating range of the ranging apparatus of the ranging portion 123-k, 123-k', which results in this repetition of the method 200 terminating without proceeding to identification of those ones of the portable user apparatuses that meet the predefined distance criterion because there were none within the operating range.

The aspect of the control portion 122-k identifying those ones of the plurality of portable user apparatuses 130 that meet the predefined distance criterion (cf. block 204) may comprise identifying those ones of the plurality of portable user apparatuses 130 that, according to the respective distances determined therefor via application of the wireless ranging procedure, are within a predefined distance from the luminaire 120-k. In other words, the distance criterion applied in said identification may comprise a predefined maximum distance from the luminaire 120-k. In various examples, the maximum distance may be a value chosen from a range from a few meters to a few tens of meters, where a suitable value for the maximum distance may be chosen e.g. in view of distances between the luminaires 120 of the lighting system 100 and/or in view of characteristics of the one or more spaces and/or areas the lighting system 100 serves to illuminate. The aspect of identifying the one or more portable user apparatuses that meet the predefined distance criterion may result in the control portion 122-k obtaining the respective user IDs assigned to the identified one or more portable user apparatuses.

According to an example, identification of the one or more portable user apparatuses that are within the maximum distance from the luminaire 120-k is applied as occupancy detection by the control portion 122-k: identification of at least one portable user apparatus 130-k that is within the maximum distance from the luminaire 120-k may be considered as an indication of occupancy at the location of the luminaire 120-k, whereas a scenario where no portable user apparatuses are identified within the maximum distance from the luminaire 120-k may be considered as an indication of non-occupancy at the location of the luminaire 120-k. In the following, such occupancy state indications derived based on operation of the ranging portion 123-k, 123-k' are referred to as ranging-based occupancy state indications, whereas occupancy state indications derived based on the occupancy sensor signal received from the (optional) sensor portion 125-k are referred to as sensor-based occupancy state indications.

The aspect of the control portion 122-k controlling the light output from the one or more light sources 121-k based at least in part on the respective authorizations assigned to the identified one or more portable user apparatuses (cf. block 206) may comprise the control portion 122-k obtaining the respective authorizations assigned to the identified one or more portable user apparatuses. The respective authorizations assigned to the plurality of portable user apparatuses 130 may be recorded as authorization data pertaining to the luminaire 120-k, where the authorization data defines the user IDs that are allowed to access the location of the luminaire 120-k. In respective examples, the authorization data pertaining to the luminaire 120-k may list those user IDs that are authorized to access the location of the luminaire 120-k or it may indicate for each of the plurality of potable user apparatuses 130 whether it is authorized to access the location of the luminaire 120-k or not.

According to an example, the authorization data pertaining to the luminaire 120-k is stored in the memory provided in the luminaire 120-k (e.g. in the memory provided at the lighting control apparatus 126-k), and the control portion 122-k obtains the authorizations under consideration by reading them from the memory (e.g. based on the respective user IDs assigned to the portable user apparatuses under consideration). The authorization data may be stored into the memory e.g. upon configuration or reconfiguration of the luminaire 120-k and/or the lighting control apparatus 126-k. In another example, additionally or alternatively, at least part of the respective authorization data pertaining to the plurality of luminaires 120 is stored in an authorization server, e.g. in the server 103, and the control portion 122-k obtains the authorizations under consideration via a procedure carried out with the authorization server. This procedure may comprise the control portion 122-k sending a request for verifying the authorization assigned to a given portable user apparatus 130-k (e.g. based on the user ID assigned thereto) to the authorization server and receiving a response from the authorization server, where the response indicates whether the respective portable user apparatus 130-k is authorized to access the location of the luminaire 120-k. In a further example,

According to an example, the control portion 122-k applies the respective authorizations assigned to the identified one or more portable user apparatuses via carrying out at least one of the following:
- control the one or more light sources 121-k to provide the light output at the target light intensity in response to at least one of the identified one or more portable user apparatuses being authorized to access the location of the luminaire 120-k;
- control the one or more light sources 121-k to provide the light output at the stand-by light intensity in response to none of the identified one or more portable user apparatuses being authorized to access the location of the luminaire 120-k.

In other words, the control portion 122-k may operate to turn or keep on the light output from the one or more light sources 121-k in scenarios where the ranging-based occupancy status indications indicate that the location of the luminaire 120-k is occupied by at least one authorized user, while the control portion 122-k may operate to turn or keep off the light output from the one or more light sources 121-k in scenarios where the ranging-based occupancy state indications indicate that the location of the luminaire 120-k is not occupied by any of the authorized users. Hence, in this example the control portion 122-k may switch or keep off the light output from the one or more light sources 121 in scenarios, where the location of the luminaire 120-k is occupied but where none of the occupants is identified as one that is authorized to access the location of the luminaire 120-k.

The example described above relies on the ranging-based occupancy state indications in detecting occupancy at the location of the luminaire 120-k together with respective authorizations of the identified occupants in controlling the light output from the one or more light sources 121-k. In other example, the lighting control apparatus 126-k includes the sensor portion 125-k (described in the foregoing as an optional element thereof), where the sensor portion 125-k comprises at least the occupancy sensor and where the control portion 122-k operates to derive the sensor-based occupancy state indications based on the occupancy sensor signal. Moreover, in this example the control portion 122-k is arranged to carry out the occupancy detection at the location of the luminaire 120-k based on the sensor-based occupancy state indications, whereas the control portion 122-k applies the respective authorizations assigned to the identified one or more portable user apparatuses for access control. As an example, this may be provided via the control portion 122-k carrying out at least one of the following:
- control the one or more light sources 121-k to provide the light output at the target light intensity in response to at least one of the identified one or more portable user apparatuses being authorized and the sensor-based occupancy state indication indicating occupancy at the location of the luminaire 120-k;
- control the one or more light sources 121-k to provide the light output at the stand-by light intensity in response to the sensor-based occupancy state indication indicating non-occupancy at the location of the luminaire 120-k.

In other words, the control portion 122-k may operate to turn or keep on the light output from the one or more light sources 121-k in scenarios where the sensor-based occupancy status indications indicate that the location of the luminaire 120-k is occupied by at least one authorized user, while the control portion 122-k may operate to turn or keep off the light output from the one or more light sources 121-k in scenarios where the sensor-based occupancy state indications indicate that the location of the luminaire 120-k is not occupied by any of the authorized users.

Regardless of relying on the ranging-based occupancy state indications or on the sensor-based occupancy state indications for occupancy detection, in an example, the control portion 122-k is arranged to issue an alert based on the respective authorizations assigned thereto. Non-limiting examples in this regard include the following:
- the control portion 122-k issues an alert in response to at least one of the identified one or more portable user apparatuses not being authorized to access the location of the luminaire 120-k;
- the control portion 122-k issues an alert in response to none of the identified one or more portable user apparatuses being authorized to access the location of the luminaire 120-k.

Herein, the first option above results in issuing the alert in a scenario where at least one non-authorized person is detected at the location of the luminaire 120-k, whereas the second option above results in issuing the alert in a scenario where occupancy of only authorized persons is detected at the location of the luminaire 120-k. In various examples, the alert may comprise an audible alert such as a predefined alert sound, a visual alert such as a predefined manner of controlling the light output from the one or more light sources 120-k, and/or an alert signal transmitted to another entity, e.g. to the authorization server.

In some examples, the luminaire 120-k of the lighting system 100 is assigned to a luminaire group that includes one or more other luminaires in addition to the luminaire 120-k, where the luminaires of the luminaire group are operationally linked to each other such that all luminaires of the luminaire group adjust (or keep) their respective light outputs to the target level whenever occupancy is detected in respective location of one of the luminaires of the luminaire group and, conversely all luminaires of the luminaire group adjust (or keep) their respective light outputs to the stand-by light level whenever none of the luminaires of the luminaire group detect occupancy in their respective locations.

Hence, when the luminaire 120-k is assigned to a luminaire group, at least one of the following may apply:
- The control portion 122-k informs, in response to detecting at least one authorized portable user apparatus that meets the distance criterion, the other luminaires of the luminaire group about the presence of at least one authorized portable user apparatus in its location. This may be carried out by the control portion 122-k transmitting a respective status message to the other luminaires of the luminaire group, which respond to this status message by switching on or keeping on their respective light outputs at the target light intensity.
- The control portion 122-k informs, in response to no longer detecting at least one authorized portable user apparatus that meets the distance criterion, the other luminaires of the luminaire group about absence of any authorized portable user apparatuses in its location. This may be carried out by the control portion 122-k transmitting a respective status message to the other luminaires of the luminaire group, which respond to this status message by adjusting or keeping their respective light outputs to the stand-by light intensity.
- The control portion 122-k receives, from another luminaire of the luminaire group, a respective status message that indicates the respective other luminaire having detected at least one authorized portable user apparatus that meets the distance criterion at its location. The control portion 122-k responds to this status message by switching on or keeping on the light output from the one or more light sources 121-k at the target light intensity.
- The control portion 122-k receives, from another luminaire of the luminaire group, a respective status message that indicates the respective other luminaire no longer detecting any authorized portable user apparatuses that meets the distance criterion at its location. The control portion 122-k responds to this status message by adjusting or keeping on the light output from the one or more light sources 121-k at the stand-by light intensity.

In some examples, one or more luminaires of the luminaire group may be ones provided without the ranging portion 123-k, 123-k', e.g. ones according to the illustration of Figure 2A without the ranging portion 123-k. Consequently, in such a luminaire, its respective control portion switches the light output of the respective luminaire to the target light intensity or to the stand-by light intensity in accordance with the respective messages received from other luminaires of the luminaire group as described above.

In some examples, the control portion 122-k may be further arranged to control light output from the one or more light sources 121-k based on the respective distances determined for one or more authorized portable user apparatuses. In this regard, the control portion 122-k may control the one more light sources 121-k to provide light output at a light intensity that depends on the distance of the closest one of the authorized portable user apparatuses, e.g. such that the applied light intensity increases with decreasing distance from the luminaire 120-k to the closest one of the authorized portable user apparatuses. In an example, such distance-based light intensity may be applied such that the control portion 122-k further determines authorizations assigned also to those portable user apparatuses that are within the operating range of the ranging portion 123-k, 123-k' but that do not meet the above-described distance criterion, applies the target light intensity for the light output in case the closest one of the authorized portable user apparatuses meets the distance criterion, and applies the above-described distance-based light intensity in case the closest one of the authorized portable user apparatuses does not meet the distance criterion.

In some examples, at least some of the plurality of portable user apparatuses 130 store respective lighting preferences associated with the user to which the respective portable user apparatus 130-k is assigned. If, for the sake of an example, assuming presence of a single authorized user apparatus at the location of the luminaire 120-k, the control portion 122-k may receive respective lighting preferences from the respective portable user apparatus 130-k and adjust the light output from the one or more light sources 121-k accordingly. In case there are multiple authorized portable user apparatuses at the location of the luminaire 120-k, the control portion 122-k may receive the respective lighting preferences from each of these multiple portable user apparatuses, derive joint lighting preferences based on the respective lighting preferences received from the multiple authorized portable user apparatuses, and adjust the light output from the one or more light sources 121-k according to the joint light preferences. In a variation of such a scenario, the lighting preferences may be stored in another entity, e.g. in a server accessible via the lighting system gateway 102, and the control portion 122-k obtains the applicable lighting preference from the other entity e.g. based in the respective user ID(s) of the authorized portable user apparatus(es) detected at the location of the luminaire 120-k.

In some examples, the portable user apparatus 130-k may enable configuration of at least some aspects of the luminaire 120-k, where the configuration may be enabled only in scenarios where the respective portable user apparatus 130-k is identified by the control portion 122-k as an authorized portable user apparatus. As an example in this regard, the portable user apparatus 130-k may receive via its user interface user input that defines lighting configuration information that is applicable for configuring an aspect of operation of the luminaire 120-k and the portable user apparatus 130-k may transmit the lighting configuration information to the control portion 122-k for application therein. The lighting configuration information may comprise, for example, definitions that pertain to the target light intensity, to the stand-by light intensity, to dimming characteristics to be applied upon switching the light output to the stand-by light intensity, etc.

In the foregoing, operation of the lighting control apparatus 126-k is described with an assumption of the lighting control apparatus being provided in the luminaire 126-k, as also illustrated in the respective examples of Figures 2A and 2B. In other examples, the lighting control apparatus 126-k may be provided in an entity that is separate from the luminaire 120-k but that is operating in relatively close proximity of the luminaire 120-k and that is communicatively coupled to the luminaire 120-k to enable providing the lighting control according to the examples provided in the foregoing with references to the lighting control apparatus 126-k and/or to elements thereof. Such an apparatus that is separate from the luminaire 120-k may be referred to as a control unit or as a sensor unit associated with the luminaire 120-k. In an example, such a sensor unit provided for the luminaire 120-k may be similar to the luminaire 120-k apart from the sensor unit not including the one or more light sources 121-k.

Figure 4 illustrates a block diagram of some components of an apparatus 300 that may be employed to implement operations described in the foregoing with references to a respective one of the lighting control apparatus 126-k or the portable user apparatus 130-k. The apparatus 300 comprises a processor 310 and a memory 320. The memory 320 may store data and computer program code 325. The apparatus 300 may further comprise communication means 330 for wired and/or wireless communication with other apparatuses and/or user I/O (input/output) components 340 that may be arranged, together with the processor 310 and a portion of the computer program code 325, to provide the user interface for receiving input from a user and/or providing output to the user. The user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the respective one of the lighting control apparatus 126-k or the portable user apparatus 130-k. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the respective one of the lighting control apparatus 126-k or the portable user apparatus 130-k. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the respective one of the lighting control apparatus 126-k or the portable user apparatus 130-k. Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the respective one of the lighting control apparatus 126-k or the portable user apparatus 130-k.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the respective one of the lighting control apparatus 126-k or the portable user apparatus 130-k. The computer-readable non-transitory medium may comprise a memory device, a record medium or another article of manufacture that tangibly embodies the computer program. As another example, the computer program may be provided as a signal configured to reliably transfer the computer program.

Reference(s) to a processor herein should be construed broadly, encompassing both programmable processors and dedicated circuits such FPGAs, ASICs, etc.

## Claims

1. A lighting control apparatus (126-k) for a luminaire (120-k) that is applicable for illuminating a location of a space, wherein the lighting control apparatus (126-k) comprises:
a ranging portion (123-k, 123-k') arranged to carry out a wireless ranging procedure with a portable user apparatus (130-k) of a plurality of portable user apparatuses (130) to determine the distance from the luminaire to the respective portable user apparatus (130-k); and
a control portion (122-k) for controlling light output from one or more light sources (121-k) of the luminaire (120-k), the control portion (122-k) arranged to:
operate the ranging portion (123-k, 123-k') to determine a respective distance from the luminaire (120-k) to at least one of said plurality of portable user apparatuses (130),
identify, based on the respective distances determined therefor, one or more portable user apparatuses that meet a predefined distance criterion; and
control the light output from the one or more light sources (121-k) based at least in part on respective authorizations assigned to the identified one or more portable user apparatuses.

2. A lighting control apparatus (126-k) according to claim 1, wherein in the ranging portion (123-k, 123-k') arranged to carry out the wireless ranging procedure comprises the ranging portion (123-k, 123-k') arranged to:
transmit one or more measurement signals to the respective portable user apparatus (130-k);
receive corresponding one or more response signals from the respective portable user apparatus (130-k); and
determine the distance to the respective portable user apparatus (130-k) based on respective transfer characteristics of the one or more pairs of the measurement signal and the corresponding response signals.

3. A lighting control apparatus (126-k) according to claim 1 or 2, wherein said distance criterion comprises a predefined maximum distance from the luminaire (120-k).

4. A lighting control apparatus (126-k) according to any of claims 1 to 3, wherein the control portion (122-k) is arranged to at least one of the following:
control the one or more light sources (121-k) to provide the light output at a target light intensity in response to at least one of the identified one or more portable user apparatuses being authorized,
control the one or more light sources (121-k) to provide the light output at a stand-by light intensity in response to none of the identified one or more portable user apparatuses being authorized, where the stand-by light intensity is substantially lower than the target light intensity.

5. A lighting control apparatus (126-k) according to any of claims 1 to 3, further comprising an occupancy sensor, wherein the control portion (122-k) is arranged to derive, based on an occupancy sensor signal received from the occupancy sensor, an occupancy state indication that indicates one or occupancy or non-occupancy at said location, and wherein the control portion (122-k) is arranged to at least one of the following:
control the one or more light sources (121-k) to provide the light output at a target light intensity in response to at least one of the identified one or more portable user apparatuses being authorized and the occupancy state indication indicating occupancy at said location,
control the one or more light sources (121-k) to provide the light output at a stand-by light intensity in response to the occupancy state indication indicating non-occupancy at said location, where the stand-by light intensity is substantially lower than the target light intensity.

6. A lighting control apparatus (126-k) according to any of claims 1 to 5, wherein the control portion (122-k) is arranged to issue an alert in response to at least one of the identified one or more portable user apparatuses not being authorized.

7. A lighting control apparatus (126-k) according to any of claims 1 to 6, wherein the control portion (122-k) is arranged to determine the respective authorizations assigned to the identified one or more portable user apparatuses by at least one of the following:
based on authorization information stored in the lighting control apparatus (126-k),
via a procedure carried out with an authorization server (103).

8. A lighting control apparatus (126-k) according to any of claims 1 to 7, wherein the ranging portion (123-k, 123-k') comprises a wireless communication apparatus arranged to carry out the wireless ranging procedure.

9. A lighting control apparatus (126-k) according to claim 8, wherein the wireless communication apparatus comprises a Bluetooth apparatus arranged to carry out the wireless ranging procedure in accordance with the Bluetooth Channel Sounding feature.

10. A lighting system (100) comprising:
one or more luminaires (120) for illuminating respective locations of a space, wherein each luminaire (120-k) comprises a lighting control apparatus (126-k) according to any of claims 1 to 7, and
a plurality of portable user apparatuses (130), each arranged to carry out the wireless ranging procedure with the ranging portion of the lighting control apparatus (126-k).

11. A lighting system (100) according to claim 10, wherein each of the plurality of portable user apparatuses (130) is one of the following:
a mobile communication device arranged to carry out the wireless ranging procedure with the ranging portion (123-k, 123-k'),
a portable tag arranged to carry out the wireless ranging procedure with the ranging portion (123-k, 123-k').

12. A lighting system (100) according to claim 10 or 11, wherein in the wireless ranging procedure
the ranging portion (123-k, 123-k') is arranged to transmit one or more measurement signals to the respective portable user apparatus (130-k),
the respective portable user apparatus (130-k) is arranged respond to said one or more measurement signals by transmitting one or more response signals to the ranging portion (123-k, 123-k'), and
the ranging portion (123-k, 123-k') is arranged to determine the distance to the respective portable user apparatus based on respective transfer characteristics of the one or more pairs of the measurement signal and the corresponding response signal.

13. A lighting system (100) according to claim 12, wherein the ranging portion (123-k, 123-k') and each of the plurality of portable user apparatuses (130) comprises a respective Bluetooth apparatus arranged to carry out the ranging procedure in accordance with the Bluetooth Channel Sounding feature.

14. A method (200) for controlling a lighting system (100) that comprises a luminaire (120-k) for illuminating a location of a space and a plurality of portable user apparatuses (130), the method (200) comprising:
carrying out (202) a respective ranging procedure between a lighting control apparatus (126-k) of the luminaire (120-k) and at least one of said plurality of portable user apparatuses (130) to determine a respective distance from the luminaire (120-k) to said at least one of the plurality of portable user apparatuses (130);
identifying (204), based on the respective distances determined therefor, one or more portable user apparatuses that meet a predefined distance criterion; and
controlling (206) light output from one or more light sources (121-k) of the luminaire (120-k) based at least in part on respective authorizations assigned to the identified one or more portable user apparatuses.

15. A computer program comprising computer readable program code (325) configured to cause performing of the following when said program code (325) is executed in a lighting control apparatus (126-k, 300) of a luminaire (120-k):
carry out a respective ranging procedure between the lighting control apparatus (126-k) and at least one portable user apparatus of a plurality of portable user apparatuses (130) to determine a respective distance from the luminaire (130-k) to said at least one of the plurality of portable user apparatuses (130);
identify, based on the respective distances determined therefor, one or more portable user apparatuses that meet a predefined distance criterion; and
control light output from one or more light sources (121-k) of the luminaire (120-k) based at least in part on respective authorizations assigned to the identified one or more portable user apparatuses.
